(19) **Europäisches Patentamt**
**European Patent Office**
**Office européen des brevets**

(11) Numéro de publication : **0 311 475 B1**

(12) # FASCICULE DE BREVET EUROPEEN

(45) Date de publication du fascicule du brevet :
**29.04.92 Bulletin 92/18**

(51) Int. Cl.$^5$ : **G01M 3/32**

(21) Numéro de dépôt : **88402364.9**

(22) Date de dépôt : **20.09.88**

(54) **Dispositif de contrôle d'étanchéité d'un récipient pour confinement d'un fluide sous pression.**

(30) Priorité : **07.10.87 FR 8713854**

(43) Date de publication de la demande :
**12.04.89 Bulletin 89/15**

(45) Mention de la délivrance du brevet :
**29.04.92 Bulletin 92/18**

(84) Etats contractants désignés :
**BE CH DE ES GB GR IT LI LU NL**

(56) Documents cités :
**FR-A- 1 209 569**
**FR-A- 2 515 348**
**US-A- 2 399 391**
**US-A- 4 683 745**
**PATENT ABSTRACTS OF JAPAN, vol. 8, no.**
**147 (P-285)[1584], 10 juillet 1984; & JP-A-59 44**
**637 (AKIRA KISHIMOTO) 13-03-1984**

(73) Titulaire : **CMB PACKAGING S.A.**
**65, avenue Edouard Vaillant**
**F-92100 Boulogne Billancourt (FR)**

(72) Inventeur : **Riviere, Maurice**
**14 allée des Myosotis**
**F-78390 Bois d'Arcy (FR)**
Inventeur : **Dauteuil, Daniel**
**Berceney-en-Othe**
**F-10190 Estissac (FR)**

(74) Mandataire : **CABINET BONNET-THIRION**
**95 Boulevard Beaumarchais**
**F-75003 Paris (FR)**

**Description**

L'invention se rapporte à un dispositif de contrôle d'étanchéité d'un récipient destiné à confiner un fluide sous pression et comprenant un corps tubulaire et un fond rapporté suivant un cordon circulaire dans un plan perpendiculaire à l'axe du corps, ce dispositif comportant un moyen de connexion temporaire étanche du récipient à une source de gaz sous pression, une enceinte où pénètre de façon étanche le récipient et munie d'un moyen manométrique, et des moyens annexes, couplés au moyen manométrique, capables de déceler l'accroissement de pression dans l'enceinte résultant d'une fuite accidentelle de gaz sous pression à travers le cordon en une période déterminée.

Les récipients dont il s'agit de vérifier l'étanchéité dans le cadre de la présente invention sont essentiellement les pulvérisateurs d'aérosols, dont le fond, concave pour résister à la pression sans compromettre la stabilité verticale du récipient, est rapporté par sertissage roulé des bords de fond et de corps, à plusieurs plis. L'étanchéité est parfaite par l'application d'une garniture en caoutchouc dans le cordon de sertissage, appliquée à l'état pâteux.

Ces pulvérisateurs comportent en outre un dôme, à l'extrémité du corps opposé au fond, généralement rapporté par sertissage également et présentant une ouverture centrale bordée où viendra se fixer, à un stade ultérieur de fabrication, une valve de pulvérisation.

Comme il s'agit d'articles fabriqués en grande série, le processus de contrôle d'étanchéité doit être rapide de mise en oeuvre et se prêter à l'automatisation.

Le procédé de base consiste à enfermer le récipient dans une enceinte étanche, alors que l'ouverture du dôme du récipient reçoit un ajutage de connexion étanche à une source de pression, avec un joint d'étanchéité. L'enceinte est reliée à un manomètre. On applique une pression de gaz de quelques bars à l'intérieur du récipient et on contrôle, après une période déterminée d'application de la pression, la pression qui règne dans l'enceinte, à l'extérieur du récipient. Si cette pression est significativement plus élevée que la pression à l'origine, c'est que du gaz est passé de l'intérieur du récipient à l'extérieur à travers une fuite de la paroi du récipient.

Le document de brevet FR-A-2 515 348 décrit un dispositif de ce genre. Toutefois, au lieu de contrôler directement une élévation de pression dans l'enceinte d'essai, on aspire à débit constant le gaz dans cette enceinte, et on mesure le temps nécessaire pour obtenir une dépression déterminée ; cette durée est significativement allongée en cas de fuite.

Bien que ce document ne donne pas de précision sur le taux de fuite minimale décelable et la durée de mesure correspondante, il ne semble pas que les différences de dispositions enseignées soient susceptibles de réduire la durée de mesure correspondant à la fuite minimale, les différences ne portant pas sur les paramètres qui jouent directement sur la durée, tels qu'ils sont précisés plus loin.

Pratiquement les fuites se produisent aux sertissages. Par ailleurs, surtout si la pression à l'intérieur du récipient est relativement élevée pour appliquer des efforts significatifs sur les sertissages, on constate que les fuites à très faible débit sont très rares. Ainsi les récipients qui n'accusent pas un débit de fuite sous 9 bars de pression différentielle supérieur à 0,5 cm³/min (1,1 x 10⁻⁵ g/s en unités légales) présentent pratiquement une étanchéité suffisante pour leur application de destination.

Les dispositifs actuels, fonctionnant sur le processus rappelé ci-dessus, réagissent en une quinzaine de secondes au débit de fuite minimal de 0,5 cm³/min.

On comprendra aisément que le contrôle d'étanchéité pour une fabrication de grande série doit se faire sur une machine automatique à barillet avec une multiplicité de positions, où les récipients sont saisis sur un convoyeur d'alimentation, chargés sur une position, reliés à l'ajutage de connexion, enfermés dans l'enceinte, mis sous pression pendant une période déterminée, subissent une mesure de pression dans l'enceinte, sont ramenés à pression atmosphérique à l'intérieur, extraits de l'enceinte et finalement, selon les résultats d'essai, soit déchargés sur un convoyeur d'évacuation s'ils sont bons, soit mis au rebut s'ils fuient.

En raison de la multiplicité des opérations, et de la durée nécessaire de mise sous pression des récipients, une cadence élevée de production exige une machine à grand nombre de positions, chère et encombrante.

Ainsi une machine d'essai typique (Borden Modèle AP-36-600) comporte un barillet à 36 positions avec un encombrement d'environ 3 m x 1,3 m x 2,7 m.

Il apparaît immédiatement qu'une réduction substantielle du temps de réponse, période de mise sous pression au bout de laquelle on décèle un augmentation significative dans l'enceinte en réponse à la fuite minimale typique (0,5 cm³/min) serait susceptible de réduire sensiblement le coût et l'encombrement d'une machine d'essai, à performances égales.

On ne peut guère agir sur la sensibilité du manomètre, qui doit établir une discrimination sûre entre l'augmentation de pression qui résulte d'une fuite et les variations accidentelles aléatoires de la pression résultant des variations de température, et des manoeuvres de la machine (fermeture rapide de l'enceinte notamment).

L'augmentation de pression à l'intérieur des récipients serait peu efficace, car on ne peut dépasser les valeurs que le récipient peut supporter sans risques de déformation permanente et de détérioration. De plus le débit de fuite est pratiquement proportionnel à la différence de pression entre les extrémités du canal de fuite. En doublant la pression dans le récipient (18 bars au lieu de 9), on doublerait le débit de fuite, ce qui diviserait le temps de réponse par 2, c'est-à-dire un gain limité de sensibilité pour une augmentation excessive de la pression.

Le troisième paramètre sur lequel on peut agir est le volume de l'enceinte, la vitesse de montée de pression en réponse à une fuite définie étant inversement proportionnelle au volume de l'enceinte, restant après introduction du récipient, ou volume mort.

Pratiquement la réduction du volume mort passe par la réduction du diamètre de l'enceinte. On est limité dans cette voie par la nécessité de laisser un certain jeu entre le corps de récipient et la paroi latérale d'enceinte, tant pour éviter la détérioration de récipients mal orientés axialement que l'effet de piston du corps introduit à vitesse élevée dans l'enceinte. Enfin le volume défini par le fond concave et le volume à hauteur du dôme représentent des volumes morts incompressibles.

Les analyses statistiques des défauts d'étanchéité des récipients pour fluide sous pression, notamment boîtiers de pulvérisateurs d'aérosols, effectuées par la Demanderesse ont montré que plus de 80 % des défauts enregistrés portaient sur les sertissages, et notamment sur le sertissage du fond sur le corps. Il apparaissait dès lors qu'un contrôle d'étanchéité de ce sertissage pouvait constituer un contrôle fiable d'étanchéité du récipient.

Ainsi, dans le but de réaliser des machines d'essais moins coûteuses et encombrantes que les machines classiques à performances, et notamment cadences au moins égales, l'invention propose un dispositif de contrôle d'étanchéité d'un récipient destiné à confiner un fluide sous pression et comprenant un corps tubulaire et un fond rapporté suivant un cordon circulaire dans un plan perpendiculaire à l'axe du corps, dispositif comportant un moyen de connexion temporaire étanche du récipient à une source de gaz sous pression, une enceinte où est introduit de façon étanche le récipient et munie d'un moyen manométrique, et des moyens annexes, couplés au moyen manométrique, capables de déceler l'accroissement de pression dans l'enceinte résultant d'une fuite accidentelle de gaz sous pression à travers le récipient en une période déterminée, caractérisé en ce que, en contrôle, l'enceinte se trouve délimitée, d'une part par une embase comportant une paroi latérale cylindrique, et une paroi de fond plane et perpendiculaire à la paroi latérale, et deux joints annulaires en élastomère encastrés parallèlement respectivement dans la paroi latérale et de fond, et d'autre part par le corps et le fond du récipient venant porter respectivement sur l'un ou l'autre des joints annulaires, avec le cordon se disposant à proximité des joints annulaires, entre ceux-ci.

On comprend que l'enceinte présente ainsi un volume mort minimal, de sorte que l'on peut identifier la fuite minimale en deux secondes à partir de la commande de vanne de mise en pression.

En outre la mise en place du récipient sur l'embase ne demande qu'une courte translation, rapide en comparaison de la translation nécessaire supérieure à la longueur du corps sur les machines classiques.

De préférence, pour un récipient dont le fond et le corps sont sertis par roulage à plusieurs plis, le premier pli, qui définit la base de repos du récipient, porte sur le joint encastré dans la paroi de fond.

Selon que le sertissage est exécuté par roulage vers l'extérieur ou l'intérieur, la paroi cylindrique d'embase se dispose extérieurement ou intérieurement au cordon de sertissage, et le joint encastré dans cette paroi cylindrique porte sur le corps ou sur le fond.

D'autres caractéristiques et les avantages de l'invention ressortiront d'ailleurs de la description qui va suivre à titre d'exemple, en référence aux dessins annexés dans lesquels :

la figure 1 est une coupe en élévation d'un dispositif selon l'invention, avec une indication schématique des branchements ;

la figure 2 est une coupe de l'embase du dispositif de la figure 1, prévue pour un récipient avec un sertissage roulé vers l'extérieur ;

la figure 3 est une coupe d'une variante d'embase, prévue pour un récipient avec un sertissage roulé vers l'intérieur ;

la figure 4A est une coupe d'une tête pour connexion du récipient à une source de pression, en position de service ;

la figure 4B est une coupe de la tête représentée à la figure 4A, en position d'insertion ;

la figure 5 est une coupe d'une variante de tête pour contrôle de l'étanchéité du sertissage du dôme.

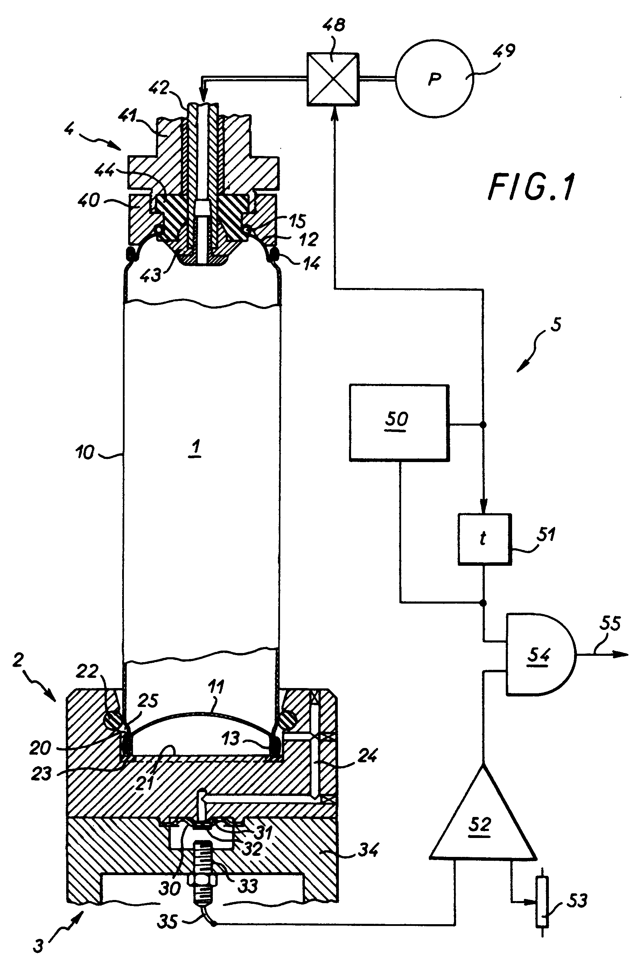

Selon le mode de réalisation choisi et représenté figure 1, le dispositif est prévu pour contrôler l'étanchéité d'un récipient 1 dans son ensemble destiné à confiner un fluide sous pression, tel un pulvérisateur d'aérosol, et constitué d'un corps tubulaire 10, d'un fond concave 11 rapporté sur le corps 10 par un sertissage par roulage formant un cordon 13 à plusieurs plis, et d'un dôme 12 rapporté également par sertissage roulé 14, et présentant une ouverture centrale bordée par un jonc roulé 15. L'étanchéité des sertissages 13 et 14 est parfaite par garnissage d'un joint de caoutchouc déposé à l'état pâteux, de façon classique.

Le dispositif comporte une embase 2 dans son ensemble comprenant une paroi cylindrique latérale 20 et une paroi de fond plane 21, perpendiculaire à la paroi latérale 20.

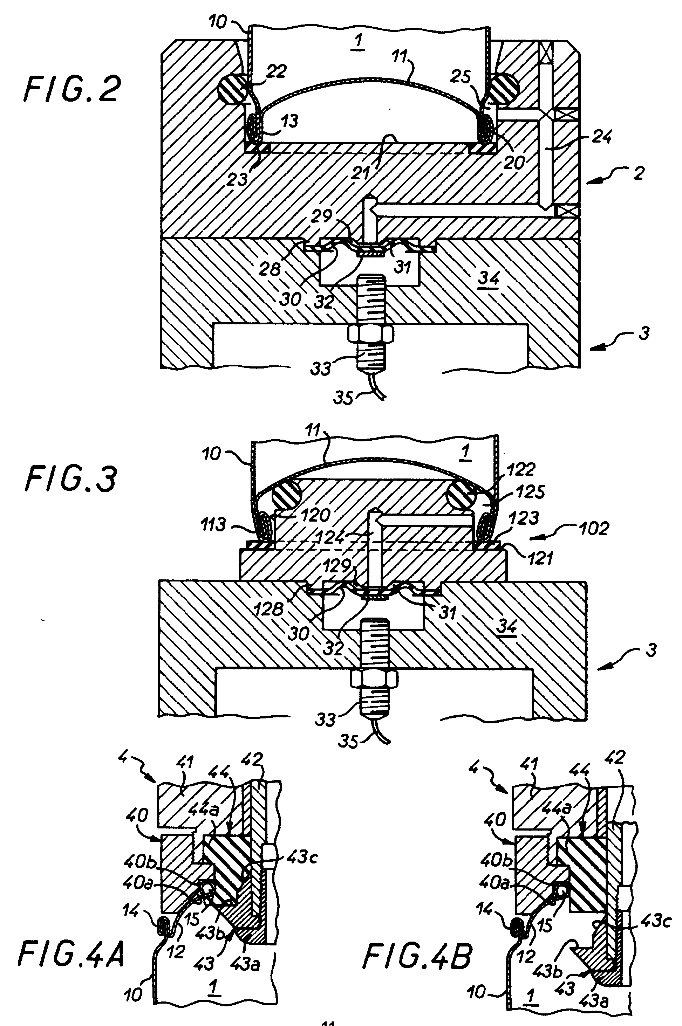

Dans la paroi latérale 20 est encastré un joint torique en élastomère 22, tandis qu'un joint annulaire à section rectangulaire 23, également en élastomère, est encastré dans la paroi de fond 21. Comme on le voit sur la figure 1, et mieux encore sur la figure 2, le récipient 1 est inséré à l'intérieur de la cavité formée par les parois latérale 20 et de fond 21 de l'embase 2, de façon que le cordon de sertissage 13 de fond porte sur le joint 23 encastré dans la paroi de fond 21, tandis que le corps 10, coaxial avec la paroi cylindrique 20, est enserré dans le joint torique 22 encastré dans cette paroi.

Comme le cordon de sertissage 13 est roulé vers l'extérieur, la feuille métallique qui constitue le fond 11 est à l'extérieur du cordon jusqu'au deuxième pli, et repose sur le joint 23 à l'emplacement du premier pli. On a constitué ainsi une enceinte 25 annulaire limitée d'une part par les parois latérale 20 et de fond 21, et d'autre part par la partie inférieure du corps 10 et la feuille de fond 11 entre les premier et deuxième plis du cordon de sertissage 13.

On notera que, si un canal de fuite s'est formé dans le cordon de sertissage 13, il débouchera nécessairement dans l'enceinte annulaire 25, car il suivra le sens du roulage.

L'enceinte 25 est mise en communication avec une capsule manométrique 3 dans son ensemble par l'intermédiaire d'un canal 24, constitué, comme on le voit mieux à la figure 2, d'une succession de perçages orthogonaux aveuglés par des bouchons vissés.

Ce canal 24 débouche vers l'enceinte 25 dans la paroi cylindrique 20, entre le joint 22 qui y est encastré et le raccordement à la paroi de fond 21. Vers la capsule manométrique 3, il débouche au centre d'une saillie tronconique 29 de l'embase 2.

Comme on le voit mieux à la figure 2, la capsule manométrique 3 comporte une paroi déformable constituée d'une membrane élastique 30 serrée à sa périphérie entre le rebord 28 d'un chambrage 31 pratiqué dans l'embase 2 et une culasse 34. La membrane 30 comporte une onde circulaire qui se loge entre le rebord 28 et la saillie tronconique centrale 29 usinés dans l'embase 2, de façon à réduire le volume mort du chambrage 31 sous la membrane 30.

Au centre de la membrane 30 et du côté de la culasse 34 est fixée une pastille 32 en matériau ferromagnétique. Dans l'axe de la capsule 3 et en face de la pastille 32 est disposé un capteur inductif 33, avec un cordon de liaison 35.

On comprendra qu'une fuite débouchant dans l'enceinte 25 va tendre à repousser la membrane 30 en s'écartant de l'embase 2, de sorte que la pastille 32 se rapprochant du capteur inductif 33, celui-ci émette un signal représentatif du volume de gaz qui a traversé la fuite.

Si l'on se reporte aux figures 4A et 4B pour les détails de la tête de connexion 4 insuffisamment clairs sur la figure 1, on voit que la tête 4 comporte une coupelle 40, à l'extrémité d'un col 41, cette coupelle 40 venant coiffer le dôme 12 du récipient 1 par une empreinte tronconique 40a, avec une gorge 40b pour loger, centré, le jonc 15 de l'ouverture centrale du dôme.

La tête 4 comporte encore un tube axial 42, coulissant dans le col de coupelle 41 et relié à une source d'air comprimé 49, par l'intermédiaire d'une électrovanne 48.

Le tube 42 pénètre axialement dans le récipient 1, et son extrémité est munie d'une bride 43, maintenue par une vis creuse 43a engagée dans le passage du tube 42.

Cette bride 43 comporte une périphérie plane 43b, tournée vers le haut, et un noyau tronconique 43c qui se raccorde à l'extérieur du tube 42 vers le haut.

Sur le tube 42 est enfilé un joint tubulaire 44 élastiquement déformable, pris entre le col 41 et la bride 43.

Par ailleurs, ce joint 44 est tenu, par un élargissement 44a, entre le col 41 et le bord interne de la coupelle 40.

Pour la mise en place de la tête 4 sur le dôme 12 du récipient 1, le tube 42 est descendu (figure 4B) de sorte que la bride 43 soit en dessous du joint 44. Ce joint 44 peut ainsi s'insérer dans l'ouverture centrale du dôme 12. Par la suite, le tube 42 est rétracté (figure 4A, figure 1) jusqu'à ce que le noyau tronconique 43c soit engagé à fond dans le joint 44, et la périphérie plane 43b en appui sur la tranche inférieure de ce joint 44.

On comprend qu'ainsi l'expansion radiale du joint 44 assure son serrage étanche sur le jonc 15 qui borde l'ouverture centrale du dôme 12, tandis que la combinaison de l'expansion par le noyau 43c et de la pression de la périphérie plane 43b contraint la partie du joint 44 qui a pénétré dans l'ouverture centrale du dôme 12 à former un bourrelet radial qui prend appui sous le jonc 15, afin d'empêcher que le récipient 1 ne soit expulsé sous l'effet de la pression interne.

Le fonctionnement du dispositif est piloté par des moyens annexes 5, qui seront décrits ci-après.

Pour contrôler l'étanchéité du cordon de sertissage 13 du récipient 1, on introduit ce récipient dans l'embase 2, comme il a été dit à l'occasion de la description de cette embase, on met en place la tête 4 avec le tube 42 en position descendue jusqu'à coiffer le dôme avec la coupelle 40, puis on rétracte le tube 42 comme il a été dit ci-dessus lors de la description de la tête 4. Ensuite un pilote central 50 envoie un signal, d'une part à la vanne 48 pour commander son ouverture et ainsi mettre en communication la source d'air comprimé 49 à 9 bars environ avec l'intérieur du récipient 1, et d'autre part à une temporisation 51, réglée à 2 secondes environ.

Comme on l'a dit dans la description de la capsule manométrique 3, s'il existe une fuite dans le cordon 13, la membrane 30 et sa pastille ferromagnétique 32 se déplacent progressivement vers le capteur inductif 33 qui émet un signal en réponse, progressivement croissant.

Ce signal est envoyé à une entrée d'un amplificateur différentiel 52 monté en comparateur à seuil réglable. Si le signal émis par le capteur 33 dépasse le seuil réglé par le potentiomètre 53, l'amplificateur 52 émet un signal qui est appliqué à une première entrée d'une porte ET 54.

Lorsque la temporisation 51 arrive en fin de période, elle émet un signal qui est appliqué à la seconde entrée de la porte ET 54, ainsi qu'au pilote central 50 pour terminer le cycle d'essai.

Ainsi, si le débit de fuite du cordon 13 a provoqué un basculement du comparateur 52 avant que la temporisation 51 n'émette son signal de fin de période, à l'apparition de ce signal les deux entrées de la porte ET 54 seront en état haut, et un signal apparaîtra sur sa sortie 55, signifiant que le cordon 13 fuit.

Par contre, si le comparateur 52 n'a pas basculé à l'apparition du signal de fin de période de la temporisation 51, le cordon 13 sera tenu pour étanche.

La variante représentée figure 3 se rapporte à un récipient 1 dans lequel le fond 11 est rapporté sur le corps 1 par sertissage roulé vers l'intérieur, de sorte que dans le cordon de sertissage 113 la feuille métallique qui constitue le corps 10 se trouve à l'extérieur jusqu'au deuxième pli.

L'embase 102 comporte alors une paroi latérale cylindrique 120, et une paroi de fond plane 121, perpendiculaire à la paroi latérale 120. Mais ici la paroi latérale 120 se dispose à l'intérieur du cordon de sertissage 113, et donc du corps 110. Un joint torique en élastomère 122 est encastré dans la partie supérieure de la paroi latérale 120 de façon à porter sur le fond 11, tandis que le premier pli du cordon de sertissage 113 porte sur un joint annulaire 123 à section rectangulaire, également en élastomère, et encastré dans la paroi de fond 121.

On définit ainsi, quand le récipient 1 est mis en place sur l'embase 102, une enceinte étanche 125 délimitée d'une part, par la paroi latérale 120 et la paroi de fond 121, et d'autre part, par le corps 10 et le fond 11, le corps 10 se prolongeant dans le cordon de sertissage 113, à l'extérieur de celui-ci jusqu'au deuxième pli. Comme avec un cordon roulé vers l'extérieur, un canal de fuite accidentel débouche ainsi dans l'enceinte 125.

Un canal 124, qui débouche vers l'enceinte 125 dans la paroi latérale cylindrique 120 entre le joint qui y est encastré et le raccordement avec la paroi de fond 121, met en communication l'enceinte 125 avec une capsule manométrique 3 identique à la capsule de la figure 2.

Il suffit par conséquent de remplacer l'embase 2 par l'embase 102 pour transformer le dispositif pour cordon de sertissage roulé vers l'extérieur 13 en un dispositif pour cordon de sertissage 113 roulé vers l'intérieur.

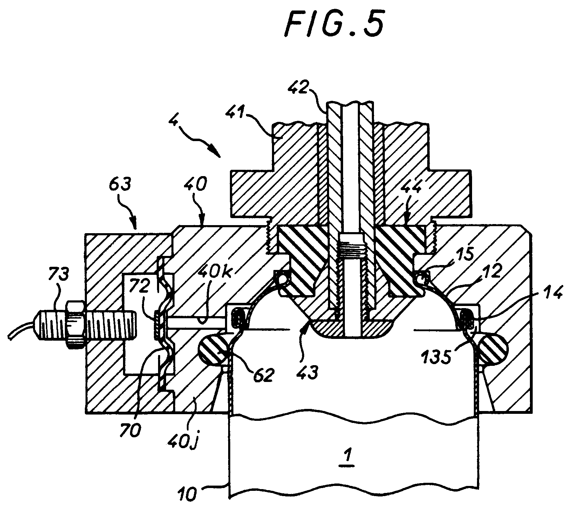

Si l'on considère la figure 5, la tête de connexion 4 qui y est représentée comporte, pour sa fonction de connexion du récipient 1 à une source de gaz sous pression, les mêmes éléments que celle qui est représentée aux figures 1 et 4A, 4B, qui portent les mêmes références.

Mais la coupelle 40 se prolonge en jupe 40j, vers le fond du récipient 1, au-delà du sertissage roulé 14 du dôme 12 sur le corps 10 ; un joint torique 62 est encastré dans cette jupe 40j, pour venir porter sur le corps 10 au voisinage de l'amorce de sertissage 14. Ce dernier est ainsi enclos dans un espace interne 135 dans la coupelle 40, entre le joint tubulaire 44 et le joint torique 62. Cet espace interne 135, coopérant avec les parois du récipient 1, constitue une enceinte comparable aux enceintes 25 et 125 décrites précédemment. Une capsule manométrique 63, de même structure que la capsule 3 déjà décrite, communique avec l'espace interne 135 par un canal 40k. Cete capsule 63 comporte une membrane souple 70 avec une pastille ferromagnétique 72, en prolongement axial d'un capteur inductif 73. Le signal émis par le capteur inductif 73 sera traité comme celui qu'émet le capteur 33.

On appréciera qu'ainsi on peut contrôler systématiquement l'étanchéité du sertissage du dôme, avec la même sensibilité que l'étanchéité du sertissage du fond, et sans diminuer cette dernière, puisque les enceintes 25, 125 et 135 sont distinctes.

On appréciera que le dispositif de l'invention non seulement réduit considérablement la durée de cycle, ou durée active, qui passe de 15 à 2 secondes environ, mais permet aussi une réduction importante de la durée des opérations de chargement et de déchargement, par réduction de la course longitudinale d'insertion du récipient dans l'enceinte et de connexion de la source d'air comprimé, et par réduction de la masse des pièces en mouvement.

Bien entendu l'invention n'est pas limitée aux exemples décrits, mais en embrasse les variantes d'exécution dans le cadre des revendications.

Notamment les moyens annexes d'analyse d'étanchéité qui n'ont été décrits que pour leur fonction peuvent revêtir toute forme d'exécution équivalente dans ses résultats, et s'incorporer ou se coupler aux moyens de pilotage d'une machine d'essai complète.

**Revendications**

1. Dispositif de contrôle d'étanchéité d'un récipient (1) destiné à confiner un fluide sous pression et comprenant un corps tubulaire (10) et un fond rapporté (11) suivant un cordon circulaire (13, 113) dans un plan perpendiculaire à l'axe du corps (10), dispositif comportant un moyen de connexion temporaire (4) étanche du récipient (1) à une source de gaz sous pression (49), une enceinte (25, 125) où est introduit de façon étanche le récipient (1) et munie d'un moyen manométrique (3), et des moyens annexes (5), couplés au moyen manométrique, capables de déceler l'accroissement de pression dans l'enceinte (25, 125) résultant d'une fuite accidentelle de gaz sous pression à travers le récipient (1) en une période déterminée, caractérisé en ce que, en contrôle, l'enceinte (25, 125) se trouve délimitée, d'une part par une embase (2, 102) comportant une paroi latérale cylindrique (20, 120), et une paroi de fond plane (21, 121) et perpendiculaire à la paroi latérale (20, 120), et deux joints annulaires (22, 122 ; 23, 123) en élastomère encastrés parallèlement respectivement dans la paroi latérale (20, 120) et de fond (21, 121), et d'autre part par le corps (10) et le fond (11) du récipient (1) venant porter respectivement sur l'un ou l'autre des joints annulaires (22, 23 ; 122, 123), avec le cordon (13, 113) se disposant à proximité des joints annulaires, entre ceux-ci.

2. Dispositif selon la revendication 1, pour un récipient (1) où le cordon (13, 113) a été obtenu par sertissage roulé à plusieurs plis, avec une garniture d'étanchéité en caoutchouc ou analogue, caractérisé en ce que le premier pli du sertissage (13, 113) porte sur le joint (23, 123) encastré dans la paroi de fond (21, 121) d'embase (2).

3. Dispositif selon la revendication 2, pour un récipient (1) dont le cordon de sertissage (13) est roulé vers l'extérieur, caractérisé en ce que la paroi latérale cylindrique (20) d'embase se dispose extérieurement au cordon (13) et le joint annulaire (22) encastré dans cette paroi porte sur le corps 10.

4. Dispositif selon la revendication 2, pour un récipient (1) dont le cordon de sertissage (113) est roulé vers l'intérieur, caractérisé en ce que la paroi cylindrique (120) d'embase se dispose intérieurement au cordon (113) et le joint annulaire (122) encastré dans cette paroi porte sur le fond (11).

5. Dispositif selon une quelconque des revendications 1 à 4, caractérisé en ce que le moyen manométrique (3) est constitué d'une capsule en forme de disque avec une paroi en membrane (30) déformable élastiquement, et d'un capteur de proximité (33) sensible au déplacement axial du centre de la membrane.

6. Dispositif selon la revendication 5, caractérisé en ce que le capteur de proximité (33) est du type inductif et disposé aligné avec l'axe de la capsule (3), la membrane (30) portant en son centre une pastille (32) en matériau ferromagnétique.

7. Dispositif selon l'une des revendications 5 et 6, caractérisé en ce que la capsule (3) est formée d'un chambrage (31) dans l'embase (2), et est reliée à l'enceinte (25, 125) par un canal (24, 124) pratiqué dans l'embase (2, 102) et débouchant dans la paroi cylindrique (20, 120) entre le joint (22, 122) qui y est encastré et le raccordement à la paroi plane (21, 121).

8. Dispositif selon une quelconque des revendications 1 à 7, pour un récipient (1) comportant, à l'extrémité du corps (10) opposée au fond (11), un dôme (12) avec une ouverture centrale bordée par un jonc (15), caractérisé en ce que le moyen de connexion est constitué par une tête (4) avec une coupelle (40, 41) venant coiffer le dôme (12), avec un tube axial (42) relié à la source de gaz sous pression (49), apte à coulisser axialement dans la coupelle et terminé à son extrémité antérieure par une bride (43), et avec un joint tubulaire (44) élastiquement déformable enfilé sur le tube (42) entre la coupelle (40, 41) et la bride (43), apte à pénétrer partiellement dans l'ouverture centrale du dôme (12), la rétraction du tube (42) par rapport à la coupelle (40, 41) provoquant ainsi un épanouissement radial du joint tubulaire (44) qui porte de façon étanche sur le jonc (15) bordant l'ouverture centrale du dôme (12).

9. Dispositif selon la revendication 8, caractérisé en ce que la bride (43) se raccorde sur le tube (42) du côté du joint (44) tubulaire par un tronc de cône (43c).

10. Dispositif selon une quelconque des revendications 8 et 9, où le dôme (12) est fixé sur le corps (10) par un sertissage roulé (14), caractérisé en ce que la coupelle (40) se prolonge d'une pièce, au-delà du sertissage (14) par une jupe (40j) avec un joint torique (62) qui porte sur le corps (10), un moyen manométrique (63) étant en communication avec un espace intérieur (135) dans la coupelle (40), entre le joint tubulaire (44) et le joint torique (62).

11. Dispositif de contrôle d'étanchéité d'un récipient (1) destiné à confiner un fluide sous pression et comprenant un corps tubulaire (10), un fond (11) et un dôme (12) rapporté sur le corps (10) par un sertissage roulé (14) et comportant une ouverture centrale bordée par un jonc (15), dispositif comportant un moyen de connexion temporaire (4) étanche du récipient (1) à une source de gaz sous pression (49), une enceinte (135) où est introduit de façon étanche le récipient (1) et munie d'un moyen manométrique (63) et des moyens annexes (5) couplés au moyen manométrique (63) capables de déceler l'accroissement de pression dans l'enceinte (135) résultant d'une fuite accidentelle de gaz sous pression à travers le récipient en une période déterminée, caractérisé en ce que le moyen de connexion est constitué par une tête (4), avec une coupelle (40) venant coiffer le dôme, avec un tube axial (42) relié à la source sous pression (49), et avec un joint tubulaire (44) élastiquement déformable enfilé sur le tube (42), pris dans la coupelle (40) et apte à pénétrer partiellement dans l'ouverture centrale du dôme (12), et à porter de façon étanche dans le jonc (15) par expansion radiale, et en ce que la coupelle (40), prolongée d'une pièce, au-delà du sertissage (14), par une jupe (40j) où s'encastre un joint torique (62) qui porte sur le corps (10), délimite, entre le joint tubulaire (44) et le joint torique (62), conjointement avec le récipient (1) qu'elle coiffe une enceinte (135) en communication avec le moyen manométrique (63).

**Patentansprüche**

1. Vorrichtung zum Prüfen der Dichtigkeit eines Behälters (1), der für die Aufnahme eines unter Druck stehenden Fluids bestimmt ist und aus einem rohrförmigen Körper (10) und einem an diesen über eine kreisförmige, in einer Ebene senkrecht zur Achse des Körpers (10) liegende Falznaht (13,113) verbundenen Boden (11) besteht, welche Vorrichtung Mittel (4) zum zeitweiligen dichten Verbinden des Behälters (1) mit einer unter Druck stehenden Gasquelle (49); einer Einschließung (25,125), in die in abdichtender Weise der Behälter eingeführt und die mit manometrischen Mitteln (3) verbunden ist; und angeschlossene Mittel (5) aufweist, welche mit den manometrischen Mitteln gekuppelt und geeignet sind, die Druckzunahme in der Einschließung (25,125) zu messen, welche sich aus einem etwaigen Auslecken des unter Druck stehenden Gases aus dem Behälter (1) während einer vorbestimmten Zeitspanne ergibt, **dadurch gekennzeichnet,** daß bei der Prüfung die Einschließung (25,125) begrenzt ist einerseits durch einen Basisteil (2,102) mit einer seitlichen zylindrischen Wand (20,120) und einer zur seitlichen Wand (20,120) senkrecht verlaufenden, ebenen Bodenwand (21,121) sowie zwei Verbindungsringen (22,122; 23,123) aus elastomerem Material, die jeweils parallel in der seitlichen Wand (20,120) bzw. dem Boden (21,121) aufgenommen sind, sowie andererseits begrenzt ist durch den Körper (10) und den Boden (11) des Behälters (1), welche jeweils auf einem der Verbindungsringe (22,23; 122,123) zur Auflage kommen, wobei die Falznaht (13,113) sich in der Nähe der Verbindungen und zwischen diesen befindet.

2. Vorrichtung nach Anspruch 1 für einen Behälter (1), dessen Falznaht (13,113) durch eine in mehrere Lagen gerollte Quetschverbindung und einer Dichtgarnitur aus Kuautschuk oder dgl. erhalten ist, **dadurch gekennzeichnet,** daß die erste Lage der Falznaht (13,113) auf der Verbindung (23,123) aufsitzt, welche in der Bodenwand (21,121) des Basisteils (2) aufgenommen ist.

3. Vorrichtung nach Anspruch 2 für einen Behälter (1), dessen Falznaht (13) nach außen gerollt ist, **dadurch gekennzeichnet,** daß die zylindrische Seitenwand (20) des Basisteils sich außerhalb der Naht (13) befindet und der Verbindungsring (22), der in der Seitenwand aufgenommen ist, an dem Körper (10) anliegt.

4. Vorrichtung nach Anspruch 2, für einen Behälter (1), dessen Falznaht (113) nach innen gerollt ist, **dadurch gekennzeichnet,** daß die zylindrische Wand des Basisteils sich innerhalb der Naht (113) befindet und der Verbindungsring (122), der in dieser Seitenwand aufgenommen ist, am Boden (11) anliegt.

5. Vorrichtung nach irgendeinem der Ansprüche 1 bis 4, **dadurch gekennzeichnet,** daß die manometrischen Mittel (3) durch eine Kapsel in Form einer Scheibe mit einer membranförmigen Wand (30) gebildet ist, die elastisch verformbar ist, und daß ein Annäherungsmeßfühler (33) vorgesehen ist, der auf eine axiale Verlagerung der Mitte der Membran anspricht.

6. Vorrichtung nach Anspruch 5, **dadurch gekennzeichnet,** daß der Annäherungsfühler (33) von einem induktiven Typ ist und in Fluchtung mit der Achse der Kapsel (3) angeordnet ist, wobei die Membran (30) in ihrer Mitte ein Plättchen (32) aus ferromagnetischem Material trägt.

7. Vorrichtung nach einem der Ansprüche 5 und 6, **ddaurch gekennzeichnet,** daß die Kapsel (3) durch eine Vertiefung (31) in dem Basisteil (2) gebildet ist und mit der Einschließung (25,125) durch einen Kanal (24,124) verbunden ist, der in dem Basisteil (2,102) eingearbeitet ist und in der zylindrischen Wand (20,120) im Bereich zwischen der Verbindung (22,122), die in dieser Wand aufgenommen ist, und der Anschlußstelle an die ebene Wand (21,121) mündet.

8. Vorrichtung nach irgendeinem der Ansprüche 1 bis 7 für einen Behälter (1), der an seinem Ende des Körpers (10), das dem Boden (11) gegenüberliegt, einen domförmigen Teil (12) mit einer zentralen Öffnung aufweist, welche von einem Wulst (15) umgeben ist, **dadurch gekennzeichnet,** daß das Verbindungsmittel durch einen Kopf (4) mit einem den Dom (12) abdeckenden Teil (40,41) und einem axialen Rohr (42) gebildet ist, welches mit einer unter Druck stehenden Gasquelle (49) verbunden und geeignet ist, in dem Teil (40,41) axial zu gleiten und das an seinem vorderen Ende in einem Flansch (33) endet und bei der ein rohrförmiger Verbindungsteil (44) aus elastisch verformbaren Material auf das Rohr (42) zwischen dem Teil (40,41) und dem Flansch (43) aufgefädelt ist, der geeignet ist, teilweise in die zentrale Öffnung des Domes (12) einzudringen, wobei das Zurückziehen des Rohres (42) im Verhältnis zu dem Teil (40,41) eine radiale Ausdehnung des ringförmigen Verbindungsteils (44) hervorruft, der sich in abdichtender Weise an den Wulst (15) anlegt, welcher die zentrale Öffnung des Domes (12) umgibt.

9. Vorrichtung nach Anspruch 8, **dadurch gekennzeichnet,** daß der Flansch (43) auf Seiten der rohrförmigen Verbindung (44) auf dem Rohr (42) in einen Kegelstumpfabschnitt (43c) übergeht.

10. Vorrichtung nach irgendeinem der Ansprüche 8 und 9, bei der der Dom (12) auf dem Körper (10) durch eine Falznaht (14) fixiert ist, **dadurch gekennzeichnet,** daß der Teil (40) sich in einem Stück über die Falznaht (14) in Form eines Kragens (40j) erstreckt mit einem ringförmigen Verbindungsteil (62), der an dem Körper (10) anliegt, und einem manometrischen Mittel (63), das mit einem Innenraum (135) in den Teil (40) zwischen dem rohrförmigen Verbindungsteil (44) und dem ringförmigen Teil (62) in Verbindung steht.

11. Vorrichtung zum Prüfen der Dichte eines Behälters (1), der für die Aufnahme eines Fluids unter Druck bestimmt ist und einen rohrförmigen Körper (10), einen Boden (11) und einen Dom (12) aufweist, der über Falznaht (14) mit dem Körper (10) verbunden ist und eine zentrale Öffnung aufweist, welche von einem Wulst (15) umgeben ist, wobei die Vorrichtung Mittel (4) zum vorübergehenden dichten Verbinden des Behälters (1) mit einer Quelle (49) von unter Druck stehendem Gas aufweist sowie eine Aufnahme (135), in welche abdichtend der Behälter einführbar ist und welche mit manometrischen Mitteln (63) und mit Anbaumitteln (5) versehen ist, die mit den manometrischen Mitteln (63) gekuppelt und geeignet sind, den Abfall des Druckes in der Aufnahme (135), festzustellen, der sich ggf. durch ein Auslecken des unter Druck stehenden Gases aus dem Behälter über eine vorbestimmte Zeit ergibt, **dadurch gekennzeichnet,** daß das Verbindungsmittel durch einen Kopf (4) mit einem den Dom einschließenden Teil (40) und einem axialen Rohr (42) gebildet ist, welches mit der unter Druck stehenden Quelle (49) verbunden ist, und mit einem rohrförmigen Verbindungsteil (44), der elastisch verformbar und auf dem Rohr (42) aufgefädelt und in dem Teil (40) aufgenommewn und geeignet ist, teilweis in die zentrale Öffnung des Domes (12) einzudringen und der abdichtend an dem Wulst (15) durch radiale Ausdehnung anliegt, wobei der Teil (40) einstückig über den Falz (14) durch einen Kragen (40j) verlängert ist und einen ringförmigen Verbindungsteil (62) aufnimmt, der an dem Körper (10) anliegt, wobei zwischen dem zylindrischen Verbindungsteil (44) und dem ringörmigen Verbindungsteil (62) in Verbindung mit dem Behälter (1) eine Ausnehmung (135) begrenzt ist, welche mit den manometrischen Mitteln (63) in Verbindung steht.

**Claims**

1. Apparatus for testing for leaks in a container (1) adapted to contain a fluid under pressure, and comprising a tubular body member (10) and a base member (11) attached along a circular seam (13, 113) in a plane perpendicular to the axis of the body member (10), the apparatus including a leak-tight temporary connecting means (4) for connecting the container (1) to a source (49) of gas under pressure, a chamber (25, 125) into which the container (1) is sealingly introduced and which is provided with pressure measuring means (3), and associated means (5) coupled to the pressure measuring means for monitoring the increase in pressure within the chamber (25, 125) resulting from accidental escape of gas under pressure through the container (1) over a predetermined time period, characterised in that, in testing, the chamber (25, 125) is delimited firstly by a base support member (2, 102) that includes a cylindrical side wall (20, 120), and a flat base wall (21, 121) perpendicular to the side wall (20, 120), together with two annular seals (22, 122; 23, 123) of elastomeric material parallel to each other and embedded respectively in the side wall (20, 120) and base wall (21, 121), and secondly by the body member (10) and the base member (11) of the container (1) bearing respectively on one or other of the annular seals (22, 23; 122, 123), with the seam (13, 113) being disposed close to the annular seals and between the latter.

2. Apparatus according to Claim 1, for a container (1) in which the seam (13, 113) has been formed by rolling in a double seaming operation with a sealing gasket of rubber or the like, characterised in that the first curl of the double seam (13, 113) bears on the seal (23, 123) which is embedded in the base wall (21, 121) of the base support member (2).

3. Apparatus according to Claim 2, for a container (1) in which the seam (13) is rolled outwardly, characterised in that the cylindrical side wall (20) of the base support member lies outside the seam (13), while the annular seal (22) embedded in the said wall bears on the body member (10).

4. Apparatus according to Claim 2, for a container (1) the seam (113) of which is rolled inwardly, characterised in that the cylindrical wall (120) of the base support member lies within the seam (113) and the annular seal (122) embedded in the said wall bears on the base member (11).

5. Apparatus according to any one of Claims 1 to 4, characterised in that the pressure measuring means (3) comprises a capsule in the form of a disc having a wall comprising a resiliently deformable membrane (30), together with a proximity sensor (33) for sensing the axial displacement of the centre of the membrane.

6. Apparatus according to Claim 5, characterised in that the proximity sensor (33) is of the inductive type and is aligned with the axis of the capsule (3), with the membrane (30) carrying a central disc (32) of ferromagnetic material.

7. Apparatus according to Claim 5 or Claim 6, characterised in that the capsule (3) is defined by a recess (31) in the base support member (2), and is connected to the chamber (25, 125) through a duct (24, 124) formed in the base support member (2, 102), the duct having an open end in the cylindrical wall (20, 120) between the seal (22, 122) which is embedded therein and the junction with the flat wall (21, 121).

8. Apparatus according to any one of Claims 1 to 7 for a container (1) having, at the end of the body member (10) remote from the base member (11), a dome (12) having a central aperture edged by a sealing ring (15), characterised in that the connecting means comprises a head (4) with a cup member (40, 41) for overlying the dome (12) and with an axial tube (42) connected to the source (49) of gas under pressure and arranged for axial sliding movement in the cup member, being also terminated at its anterior end in a flange (43), together with a resiliently deformable, tubular sealing member (44) fitted on the tube (42) between the cup member (40, 41) and the flange (43) and adapted to penetrate partially into the central aperture of the dome (12), so that retraction of the tube (42) with respect to the cup member (40, 41) gives rise to radial expansion of the tubular sealing member (44) which bears sealingly on the sealing ring (15) surrounding the central aperture of the dome (12).

9. Apparatus according to Claim 8, characterised in that the flange (43) is carried on the tube (42) on the side of the tubular sealing member (44) by means of a frusto-conical element (43c).

10. Apparatus according to either one of Claims 8 and 9, in which the dome (12) is secured on the body member (10) by means of a rolled seam (14), characterised in that the cup member (40) is extended integrally, beyond the seam (14), by a skirt (40j) having an O-ring seal (62) which bears on the body member (10), with a pressure measuring means (63) being in communication with an internal space (135) in the cup member (40) between the tubular sealing member (44) and the O-ring seal (62).

11. Apparatus for testing for leaks in a container (1) adapted to contain a fluid under pressure and comprising a tubular body member (10), a base member (11), and a dome (12) attached on the body member (10) by means of a rolled seam (14) and having a central aperture edged by a sealing ring (15), wherein the apparatus includes leak-tight temporary connecting means (4) for connecting the container (1) to a source (49) of gas under pressure, a chamber (135) into which the container (1) is sealingly introduced and which is provided with a pressure measuring means (63), and associated means (5) coupled to the pressure measuring means (63) and adapted to monitor the increase in pressure in the chamber (135) resulting from an accidental leak of gas under pressure through the container over a predetermined period of time, characterised in that the connecting means comprises a head (4) having a cup member (40) for overlying the dome, an axial tube (42) connected to the pressurised source (49), and a resiliently deformable tubular sealing member (44) fitted around the tube (42) and retained in the cup member (40), being adapted to penetrate partially into the central aperture of the dome (12) and to engage sealingly in the sealing ring (15) by radial expansion, and in that the cup member (40), which is extended integrally beyond the seam (14) by a skirt (40j) in which is embedded an O-ring seal (62) which bears on the body member (10), defines, between the tubular sealing member (44) and the O-ring seal (62), and in cooperation with the body member (1) which it overlies, a chamber (135) communicating with the pressure measuring means (63).

FIG.1

*FIG.2*

*FIG.3*

*FIG.4A*

*FIG.4B*

# FIG.5